# DEMANDE DE BREVET EUROPEEN

(11) **EP 1 178 620 A1**
(43) Date de publication de la demande: **06.02.2002**
(21) Numéro de dépôt: 01202837.9
(22) Date de dépôt: 24.07.2001
(51) Int. Cl.: H04J 3/06

(54) **Procédé et systeme pour la synchronisation de trame**

(30) Priorité: 31.07.2000 FR 0010048
(71) Demandeur: Koninklijke Philips Electronics N.V., 5621 BA Eindhoven (NL)
(72) Inventeur: Ramanzin, Yves, 75008 Paris (FR)
(74) Mandataire: Chaffraix, Jean

(57) **Abrégé**

Ce système de transmission de données est formé :
- d'au moins une partie émission (50) relative à un appareillage (2) comportant des circuits d'émission pour traiter les données utiles en vue de former des séries d'informations et
- d'au moins, une partie réception (51) d'un autre appareillage (3) comportant des circuits de réception pour traiter lesdites séries d'informations transmises. Il est prévu dans ce système des moyens de contrôle d'intégrité pour fournir au moins une indication d'erreur sur les informations transmises et, au niveau des circuits de réception, des moyens pour valider des séries d'informations transmises même en cas de l'apparition de l'indication d'erreur. Ainsi, il est possible de transmettre des données d'images dans un système présentant une faible largeur de bande.

## Description

L'invention concerne un système de transmission de données utiles, formé
- d' au moins une partie émission comportant des circuits d'émission pour traiter les données utiles en vue de former des séries d'informations et
- d'au moins, une partie réception comportant des circuits de réception pour traiter lesdites séries d'information transmises, comprenant :
   - des moyens de contrôle d'intégrité pour fournir au moins une indication d'erreur sur les informations transmises.

L'invention concerne aussi un procédé de transmission de données utiles.

L'invention concerne encore un appareillage électronique comportant une partie émission et une partie réception de sorte qu'il devient possible depuis un tel appareillage d'émettre et de recevoir des informations.

L'invention trouve d'importantes applications notamment dans les systèmes de radio mobiles, pour lesquels on souhaite transmettre des informations multimédia. On pourra se reporter à ce sujet au document de brevet PCT WO99/02003 qui décrit un système pour transmettre des images. Ainsi un appareillage constituant un poste téléphonique mobile peut émettre et recevoir des images.

Dans ce genre de système, on se trouve confronté aux problèmes des erreurs qui sont amenées par la transmission de ces informations sur des canaux à bande passante plutôt réduite répondant, par exemple à la norme UIT H.223.

La présente invention propose un système du genre mentionné dans le préambule qui permet une transmission aisée des informations du type multimédia notamment.

Pour cela un tel système est remarquable en ce que lesdits circuits de réception comportent des moyens pour valider des séries d'informations transmises même en cas de l'apparition de l'indication d'erreur.

L'idée de l'invention est de tolérer quelques erreurs qui ne sont pas forcément fatales à la liaison et de récupérer des informations même si des erreurs ont été décelées. Il faut avoir aussi à l'esprit que quelques erreurs sur une image ont moins d'importance que des erreurs sur des données de gestion, celles par exemple qui gèrent l'établissement des communications d'un réseau de type GSM. Ces dernières doivent donc être surveillées avec plus de rigueur.

Selon une autre caractéristique de l'invention un tel système, dans lequel les circuits d'émission forment un en-tête pour chaque série, est remarquable en ce que les moyens de contrôle d'intégrité agissent sur lesdits en-têtes.

Cette autre caractéristique propose donc de limiter le contrôle des séries d'informations transmises à cet en-tête ce qui simplifie le traitement tout en procurant un résultat satisfaisant.

Un procédé de transmission applicable à un tel système est remarquable en ce qu'il comporte les étapes suivantes :
- mise en place d'un en-tête pour les données utiles à transmettre
- analyse dudit en-tête pour fournir une indication d'erreur de l'en-tête
- acceptation des données utiles pour certaines indications d'erreur.

La description suivante, faite en regard des dessins ci-annexés, le tout donné à titre d'exemples non limitatifs fera bien comprendre comment l'invention peut être réalisée. Sur les dessins :
La figure 1 montre un système conforme à l'invention.
La figure 2 montre d'une manière schématique les parties émission et réception du système conforme à l'invention.
La figure 3 montre l'organisation des série d'informations transmises.
La figure 4 montre un diagramme schématique de la mise en oeuvre de l'invention dans le cadre des normes précitées.
Les figure 5 et 6 montrent un ordinogramme explicitant le fonctionnement de la partie réception.

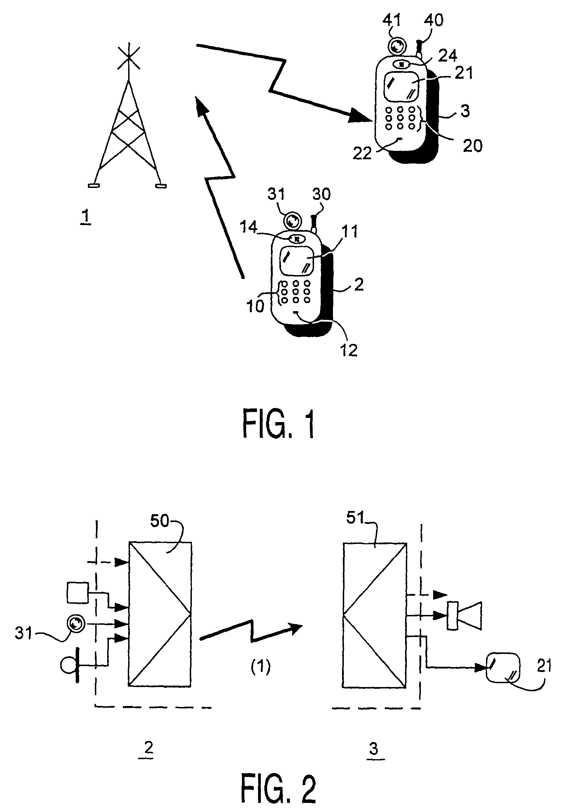

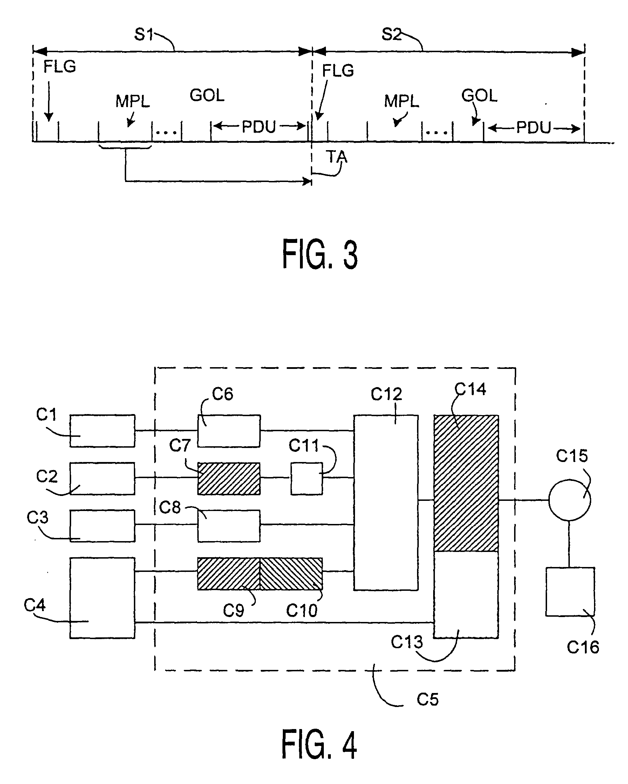

A la figure 1, on a représenté un système conforme à l'invention. La référence 1 indique une station de base et les références 2 et 3, des stations mobiles. Ces stations mobiles comportent, disposés sur une face avant :
- un clavier 10, un écran 11 un microphone 12, un écouteur 14 pour la station 2,
- un clavier 20, un écran 21 un microphone 22, un écouteur 24 pour la station 3,
et disposées sur le dessus :
- une antenne 30 et une caméra de télévision 31 pour la station 2,
- une antenne 40 et une caméra de télévision 41 pour la station 3.
Grâce au système de l'invention, les images captées par l'une des caméras 31 ou 41 peuvent être rendues visibles sur l'écran 21, ou 11 de l'autre station mobile. Ces stations 2 et 3 sont des mobiles radio téléphoniques répondant à une norme du type GSM. Comme d'une part cette norme alloue une bande passante assez réduite pour la transmission d'images et que, d'autre part, l'émission est faite à une puissance assez réduite, cette transmission d'images est donc entachée d'erreurs.

La figure 2 montre le schéma de la transmission entre les deux stations mobiles 2 et 3. On considère la transmission d'images dans le sens station 2 vers la station 3 en transitant par la station de base 1. Les images en question sont des images captées par la caméra 31 de la station 2 pour être visualisées sur l'écran 21 de la station 3. Aux données utiles qui concernent uniquement les images on adjoint d'autres informations pour la gestion de la transmission en vue de constituer des séries d'informations qui seront analysées au niveau de la partie réception de la station 3. Toutes ces données sont multiplexées au niveau de la partie émission 50 de la station 2 et sont traitées par la partie réception 51 de la station 3.

Sur la figure 3, on a représenté deux séries d'informations S1 et S2. Cette figure 3 montre la mise en place de ces informations de gestion qui sont notamment la mise en place d'une information de synchronisation FLG(HDLC), une information de longueur de série MPL et une information de codage par code de Golay tel que préconisé dans la norme précitée UIT H.223. Cette information de codage est référencée par GOL. Ensuite les données utiles PDU sont transmises. L'information MPL contenue dans la série S1 permet de déterminer le temps TA auquel survient la série d'information S2.

La figure 4 résume les normes utilisées dans l'exemple de réalisation décrit. Parmi les différentes cases montrées C1 à C16, certaines sont représentées en grisé pour indiquer les parties modifiées par les mesures de l'invention.

La case C1 représente les connexions d'entrée/sortie d'un équipement vidéo.

La case C2 représente les connexions d'entrée/sortie d'un équipement audio.

La case C3 représente les applications concernant l'utilisateur et impliquant des données.

La case C4 représente le système de commande du système.

La case C5 représente l'ensemble des cases explicité par les recommandations H.234.

La case C6 représente un codec vidéo selon les recommandations H.263/H.261.

La case C7 représente un codec audio selon les recommandations G.723/G.723C, cette case a été modifiée pour gérer un retard, indiqué par la case C11 de sorte à assurer une synchronisation entre l'image et le son.

La case C8 concerne les protocoles relatifs aux données de l'utilisateur, par exemple le transfert de fichier.

Les cases C9 et C10 concernent le protocole de commande relatif à la signalisation du système. Il permet de commander des fonctions à chaque extrémité de la liaison.

La case C12 représente le multiplexage et le démultiplexage des différentes données. C'est dans cette case que l'on insère les en-têtes, la longueur de la série d'informations, et l'encodage au moyen du code de Golay.

Les cases C13 et C14 concernent les fonctions modem pour transmettre et recevoir les différentes données.

La case C15 représente le réseau GSM.

La case C16 représente l'unité de contrôle multipoints.

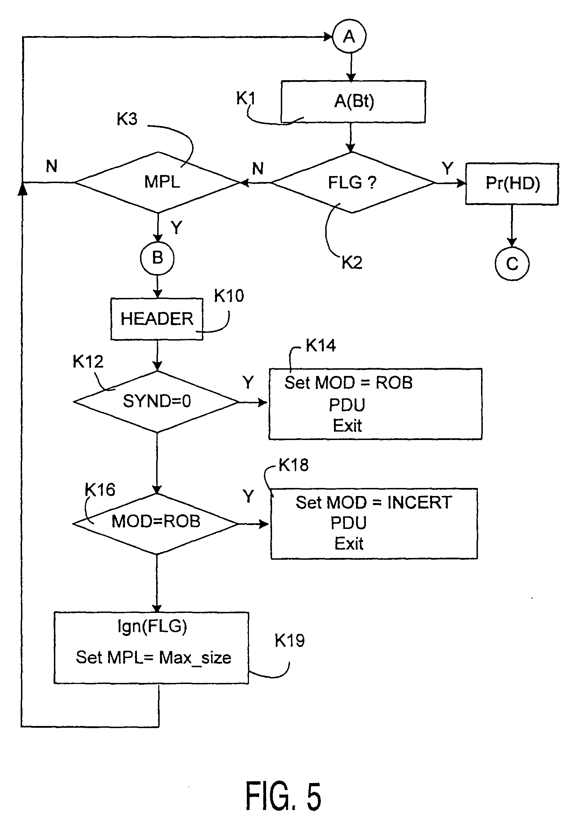

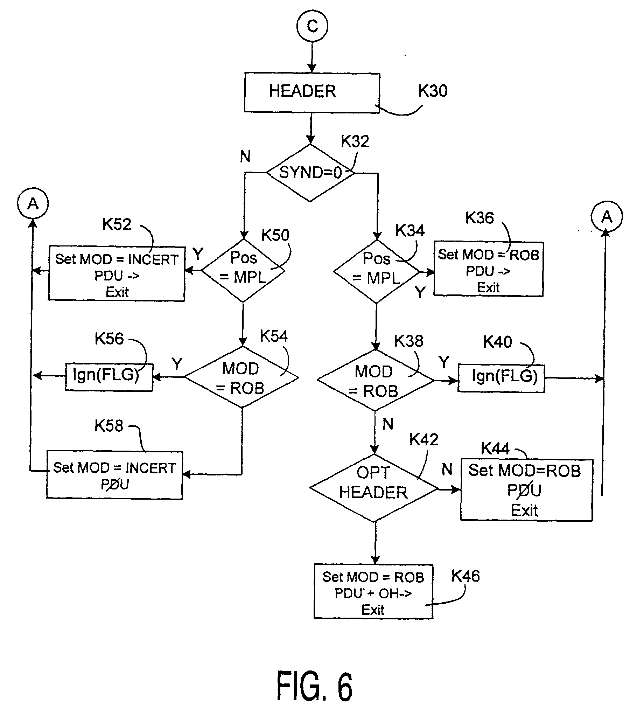

Le fonctionnement du système de l'invention est explicité à l'aide des organigrammes des figures 5 et 6.

A la figure 5, la case K1 indique l'analyse du flux de données en vue de rechercher l'indication de début de série FLG. Cette analyse s'effectue sur deux octets. Si ces deux octets ne contiennent pas l'indication de synchronisation (FLG) (case K2), on examine alors si toute la série a été reçue ou pas (case K3). Tant que la série n'a pas été reçue, on retourne à la case K1. Si toute la série a été traitée et que l'indication FLG n' a pas été trouvée, on passe à la case K10. A cette case K10 on traite suffisamment d'octets pour appliquer les calculs déterminant le syndrome du code de Golay précité. Si ce syndrome indique « 0 », case K12, alors les informations sont estimées valides et l'on se met en mode dit mode « Robuste », case K14. Si ce syndrome n'est pas égal à « 0 », on teste à la case K16 si l'on n'est pas en mode « Robuste », si c'est oui, on passe à la case K18. Là si on valide la série, on se met alors en mode « Incertain ». Si le test de la case K16 indique un mode qui n'est pas le mode « Robuste », on passe à la case K19. On ignore l'indication de début et on met la variable MPL à la valeur maximale de longueur que peut atteindre une série. De là, on va à la case K1.

Le test indiqué à la case K2 peut se révéler positif, on effectue donc des opérations montrées à la figure 6.

A la figure 6, le traitement indiqué à la case K30 est le même que celui indiqué à la case K10. Si le syndrome se révèle satisfaisant ce qui est testé à la case K32, on passe à la case K34 qui est un test sur la position trouvée par rapport à celle contenue dans la variable MPL. Si c'est le cas, alors on va à la case K36. Là on se met en mode « Robuste » et la série de données est validée. Si il y a discordance sur ces positions, alors on va tester dans quel mode on se trouve (case K38). Si l'on est dans le mode « Robuste », l'en-tête est ignoré, on pense que c'est de l'information (case K40). Si l'on n'est pas dans ce mode alors on examine si l'option de la norme H223 qui prévoit d'envoyer les informations de l'en-tête de la série précédente dans l'en-tête de la série courante est utilisée ( case K42). Si ce n'est pas le cas alors on passe à la case K44 où l'on se met dans le mode « Robuste » et on rejette la série sinon on valide la série avec les informations optionnelles contenues dans l'en-tête courante et on se met dans le mode « Robuste » (case K46).

Si le syndrome analysé à la case K32 n'est pas satisfaisant, alors on passe à la case K50 et l'on examine la position (le temps fonction de l'information MPL). Si celle-ci est OK on va à la case K52 où la série est validée mais l'on se met dans le mode « Incertain ». Si cette position n'est pas OK alors on examine, case K54, dans quel mode on se trouve. Si l'on n'est pas dans le mode « Robuste » l'en-tête est ignoré, on pense que c'est de l'information (case K56). Si l'on est dans le mode incertain, alors on y reste et l'on rejette la série (case K58).

Les indications d'erreurs de transmission sont données, notamment par différents tests indiqués aux figures 5 et 6 ; par exemple, celui de la case K2 si le motif de synchronisation n'a pas été trouvé, celui de la case K12 et de la case K32 lorsque le syndrome est différent de « 0 ».

L'invention couvre tout émetteur et tout récepteur qui utilise les concepts de la présente invention.

## Revendications

1. Système de transmission de données utiles, formé
- d'au moins une partie émission comportant des circuits d'émission pour traiter les données utiles en vue de former des séries d'informations et
- d'au moins, une partie réception comportant des circuits de réception pour traiter lesdites séries d'information transmises, comprenant :
des moyens de contrôle d'intégrité pour fournir au moins une indication d'erreur sur les informations transmises
**caractérisé en ce que** lesdits circuits de réception comportent des moyens pour valider des séries d'informations transmises même en cas de l'apparition de l'indication d'erreur.

2. Système de transmission selon la revendication 1, dans lequel les circuits d'émission forment un en-tête pour chaque série, **caractérisé en ce que** les moyens de contrôle d'intégrité agissent sur lesdits en-têtes.

3. Système de transmission selon la revendication 1 ou 2 **caractérisé en ce que** les circuits d'émission comportent des moyens d'insertion pour insérer des informations de positionnement dans les en-têtes des séries d'informations **caractérisé en ce que** les moyens d'intégrité fournissent une indication d'erreur pour une réception de série non conforme à l'indication de positionnement.

4. Système de transmission selon l'une des revendications 1 à 3 dans lequel les circuits d'émission comportent des moyens de gestion pour déterminer des modes de qualité de transmission **caractérisé en ce que** l'on distingue un mode dit mode robuste et un mode dit incertain, le mode robuste permettant d'accepter plus d'erreurs que le mode incertain.

5. Emetteur convenant à un système selon l'une des revendications 1 à 4 comportant lesdits moyens d'émission et lesdits moyens d'insertion.

6. Récepteur convenant à un système selon l'une des revendications 1 à 4 **caractérisé en ce qu'**il comporte lesdits moyens d'intégrité.

7. Appareillage électronique comportant une partie émission et une partie réception convenant au système selon l'une des revendications 1 à 4.

8. Procédé de transmission de données utiles par série d'information, appliqué à un système selon l'une des revendications 1 à 4 **caractérisé en ce qu'**il comporte les étapes suivantes :
- mise en place d'un en-tête pour les données utiles à transmettre
- analyse dudit en-tête pour fournir une indication d'erreur de l'en-tête
- acceptation des données utiles pour certaines indications d'erreur.

9. Procédé selon la revendication 8 **caractérisé en ce que** dans l'en-tête une information de codage d'erreur est introduite et **en ce que** une indication d'erreur est fournie en fonction de ce codage d'erreur.

10. Procédé selon la revendication 8 ou 9 **caractérisé en ce que** dans l'en-tête une indication de longueur de la série d'informations est introduite et **en ce qu'**une indication d'erreur est fournie lorsque la série suivante n'apparaît pas à l'instant défini par ladite indication de longueur.

11. Procédé selon l'une des revendications 8 à 10 **caractérisé en ce que** l'on distingue un mode dit mode robuste et un mode dit incertain, le mode robuste permettant d'accepter plus d'erreurs que le mode incertain en vue de valider les données utiles.
